# EUROPEAN PATENT SPECIFICATION

(11) **EP 1 827 137 B1**
(45) Date of publication and mention of the grant of the patent: **08.12.2010**
(21) Application number: 05799494.9
(22) Date of filing: 07.10.2005
(51) Int. Cl.: A23L 1/30, A23L 1/24, A23L 1/48, A23L 1/307, A23D 7/005, A23D 7/01, A23D 7/015

(54) **LOW ENERGY FOOD PRODUCT**
NAHRUNGSMITTELPRODUKT MIT NIEDRIGEM ENERGIEGEHALT
ALIMENT A BASSE TENEUR ENERGETIQUE

(30) Priority: 08.10.2004 FI 20041302
(43) Date of publication of application: 05.09.2007
(73) Proprietor: Raisio Nutrition Ltd., 21200 Raisio (FI)
(72) Inventor: EKBLOM, Jari, FI-21210 RAISIO (FI); LAHTINEN, Ritva, FI-20240 TURKU (FI); KOPONEN, Leena, FI-20320 TURKU (FI)
(74) Representative: Svensson, Johan Henrik
(86) International application number: PCT/FI2005/000427
(87) International publication number: WO 2006/037847

(56) References cited:
- EP-A- 0 897 671
- EP-A- 1 197 153
- WO-A-01/72136
- WO-A-98/19556
- WO-A-03/013275
- US-A1- 2001 027 190

## Description

### Field of the Invention

The present invention relates to low energy emulsified food products with improved texture and processing properties. These products are also healthier due to the added ingredient. In addition, a method for producing the products is disclosed.

### Background of the Invention

There are many health aspects involved with the use of food products containing plant sterol and/or stanol e.g. they reduce the cholesterol absorption from the intestines, lower the serum cholesterol levels and thereby reduce the risk of atherosclerosis.

On the market there is a need of low energy food products having high product quality and containing plant sterol and/or stanol. By high product quality is here meant that the food products are stable for a long time, have an excellent mouthfeel and a texture close to corresponding full-fat products with or without plant sterol and/or stanol.

When producing emulsified food products of fatty-type containing plant sterol fatty acid ester and/or plant stanol fatty acid ester there is a problem concerning stability and mouthfeel when trying to produce products with very reduced amount of fat (triglycerides). Water is easily lost from the emulsion or in the worst case it is not possible to formulate an emulsion at all.

In US 6 376 482 a cholesterol-reducing-compound-containing mesophase-stabilized composition for use in low-fat, fat-free and triglyceride-free food products is disclosed. The mesophase-stabilized composition contains about 1-50% of a cholesterol-reducing compound, an aqueous phase and an emulsifier mixture in an amount of about 1-15%. The emulsifier mixture contains emulsifiers A, B and C, or emulsifiers A and C or emulsifiers B and C, wherein the emulsifier A has a HBL value of about 6-9, emulsifier B has an HBL value of about 2-6 and emulsifier C has a HBL value of about 9-22. The cholesterol-reducing compound may be a sterol, a sterol ester, a stanol or a stanol ester. The preparation process of the food product always includes a pre-preparation of the mesophase-stabilized composition, which makes the food preparation complex and laborious. The pre-preparation step also requires investments in separate equipment.

In Example 3 of US 6 376 482 different amounts of stanol ester has been added in the preparation of a mesophase-stabilized emulsion. The emulsions contain 10% of triglycerides and 6% of emulsifiers. From the sample containing the highest amount of stanol ester (30%) no emulsion could be formed. The weight ratio of emulsifiers to the sum of stanol esters and triglycerides in this sample was 0.15:1, while it was as high as 0.2:1 for the sample containing 20% stanol ester, which sample formed a mesophase-stabilized emulsion. For emulsifiers there are ADI (Acceptable Daily Intake) values and their use in foods are strictly regulated in e.g. the EU. There is also a general wish amongst consumers and food producers to use as low amounts of emulsifiers as possible in food products. Therefore, besides being complex this method cannot be used for realising emulsified food products containing high amounts of stanol ester.

US 5 932 562 discloses an aqueous homogenous micellar mix of a free plant sterol and lecithin which has been dried to a finely divided water-soluble powder. The ratio of the lecithin emulsifier to plant sterol is 1-10:1. The powder can be used in food products, including fat-free foods and beverages. This publication only relates to free sterols and it utilises undesirable high amounts of lecithin as emulsifier.

US 6 267 963 discloses full-fat, reduced-fat, low-fat, fat-free and triglyceride-free food products into which a plant sterol/emulsifier complex or a plant stanol/- emulsifier complex has been incorporated. The complex is produced by mixing the emulsifier with the sterol or stanol in a weight ratio of 0.5-2:1 together with 0-80% of oil, heating to form a melted mixture, cooling to co-crystallize the plant sterol or stanol and the emulsifier to form the complex. This complex can then be incorporated into a food. Preferably the complex is prepared with non-esterified plant sterols. E.g. in Example 5 the preparation of a low-fat ranch dressing containing 2% triglycerides is disclosed using a complex prepared in Example 3. The dressing contains 2% free plant sterols and the weight ratio of emulsifier to the sum of sterols and triglycerides can be calculated to be 0.5:1. Also this document uses undesirable amounts of emulsifiers and the pre-preparation of the complex makes the whole process laborious.

US 6 190 720 discloses a food ingredient to be incorporated in reduced-fat, low-fat, or fat-free food products. The food ingredient comprises a homogenous mixture of a sterol, fat and an emulsifier. The ingredient is produced by heating the sterol to the melting point of the sterol such that at least a substantial portion of the sterol is melted. A fat and an emulsifier are combined with the sterol before heating or are added to the melted sterol. Subsequently the mixture is cooled under agitation. In case of free sterols the heating temperature is from 130°C to 150°C, and when sterol esters are used the heating temperature is about 110°C. The food ingredient is typically incorporated in an amount of 5% to 20% by weight into the food product. The preparation includes dispersing the food ingredient into water and/or oil. As the food ingredient always contains fat it is impossible to prepare food products with very low fat content while keeping the sterol amount high enough. The pre-preparation of the food ingredient makes the whole process laborious.

US 6 391 370 discloses a sterol-emulsifier dispersion to be incorporated in full-fat, reduced-fat, low-fat or fat-free food products. The dispersion comprises 1-80% of a sterol-emulsifier blend and 20-99% of an oil or water, and the sterol-emulsifier blend comprises 75-99.9% of a plant sterol and 0.1-25% of an emulsifier. According to the specification the non-esterified sterols are most preferred. The dispersion is formulated by micromilling to an average particle size of 1-40 microns. Due to the micromilling the preparation process is complicated.

EP 1 059 851 discloses a stable emulsifier-free homogenous suspension containing a hydrophobic substance or a substance having a melting point of at least 130°C and a thickener in an aqueous medium. The preferred substance is β-sitosterol or β-sitostanol. This suspension can be used for the preparation of dairy products, such as yoghurts. Typical yoghurts described in this specification contain less than 1% by weight of β-sitosterol or β-sitostanol. The disclosed processes for the preparation of food products include the pre-preparation of the stable homogenous suspension.

EP 897 671 discloses aqueous dispersions or suspensions and food products made of these. The dispersions are made of a high melting lipid having a mean size of 15 microns or lower and a melting point within the range of 75-200°C. A non-sterol emulsifier is also included in the dispersions at a weight ratio of emulsifier to high melting lipid of less than 1:2. As examples of high melting lipids are mentioned free plant sterols and plant sterol esters, free plant sterols being preferred. The dispersions can be used for preparing e.g. water continuous low or no fat spreads, but may be used in many different food products. The specification teaches that it is essential to have a high melting lipid to accomplish the desired structure in the food product and the high melting sterol can be used as a substitute for saturated fat and thereby a reduced amount of calories is obtained in the food product. The preparation process of the food product always includes a pre-preparation of the aqueous dispersion, which makes the food preparation complex.

Contrary to the teaching of EP 897 671 the present invention uses a completely different kind of plant sterol ester and/or plant stanol ester, which instead of having a high melting point is liquid at room temperature. More specific the sterol and/or stanol ester to be used in the present invention is defined by how much saturated fatty acids (SAFA) it contains in its fatty acid part. Corresponding or closely related plant sterol and/or stanol fatty acid esters and their preparation methods are disclosed e.g. in WO 99/56558 and WO 01172136.

WO 99/56558 discloses a sterol and/or stanol fatty acid ester composition wherein there is less than 7% of saturated fatty acids and more than 50% of polyunsaturated fatty acids in the fatty acid part of the ester. The composition can be used e.g. in food products such as salad oils, cooking oils, salad dressings, sauces, mayonnaises, spreads and butter. Also low-fat products are mentioned, e.g. low-fat spreads. In these low-fat spreads the sterol ester composition is used as part of the vegetable oil and in addition hardstocks are added. These spread products therefore will contain quite much triglycerides and have a quite high energy content.

WO 01/72136 teaches that sterol ester compositions having fatty acid moieties comprising more than 50% monounsaturated fatty acids (MUFA) and preferably less than about 6% saturated fatty acids have increased solubility in oils and clear oils can therefore be produced using these sterol ester compositions. The produced clear oils, such as cooking or salad oils preferably contain from 10% to 20% sterol ester composition.

Free plant sterols and stanols are practically unabsorbable and provide as such no energy to the body. When producing low-energy, cholesterol-lowering sterol-based food products their use would therefore be preferred. However, the use of free plant sterols and stanols is limited because of problems with the sensory quality, such as sandyness, of such kind of food products. On the other hand, plant sterol and/or stanol fatty acid esters are often associated to food products containing triglycerides as the main aim of using esterified plant sterols and/or stanols in such products is to provide a near to optimal daily intake of sterols and/or stanols when WO 98/19556 discloses texturizing compositions comprising sterol and/or stanol fatty acid esters as texturizing agent and optionally a hardstock. The texturizing agent has a crystalline structure at room temperature and the preferred melting point is in the range of 37°C to 40°C. The fatty acid part of the sterol and/or stanol fatty acid esters is preferably derived from rapeseed oil, sunflower oil, soybean oil or corn oil. This document also discloses food products containing fat blends comprising a liquid oil component and said texturizing composition. In such food products the hardstock can partly or totally be replaced by said texturizing agent. the products are used as part of the daily diet. As the problem of obesity related diseases is increasing there exists a need for low-fat products with low energy content. However, as the taste of food products is an important selection criteria to the consumer, there is a need for high quality food products with reduced, low or even no content of triglycerides. Furthermore, there exists a need for high quality food products with low energy content providing the daily optimal intake of plant sterol and/or stanol fatty acid esters. This invention relates to high quality, low energy emulsified food products providing an optimal daily intake of plant sterols and/or stanols for effective reduction of serum levels of total and LDL cholesterol. Furthermore, high quality, low energy emulsified food products providing an optimal daily intake of plant sterols and/or stanols can be produced according to the invention with no or very low content of triglycerides.

### Summary of the Invention

It has now been found that emulsified fatty-type of food products with a low energy content and a minimal content of emulsifier or even no emulsifier are obtainable by using plant sterol and/or stanol ester having a fatty acid composition containing 0 to 7% by weight of saturated fatty acids (SAFA).

### Definitions

In this invention the plant sterols and/or plant stanols are esterified with a fatty acid and they are here called "(plant) sterol and/or stanol ester" shortened from plant sterol fatty acid ester and/or plant stanol fatty acid ester. Examples of suitable fatty acids have a carbon chain length of 2-24 carbon atoms, may be saturated, monounsaturated or polyunsaturated, including also special fatty acids, such as conjugated fatty acids, e.g. CLA, and EPA and DHA, however, provided that the fatty acid composition of the plant sterol and/or stanol fatty acid ester comprises from 0 to 7% by weight saturated fatty acids. Preferably the plant sterols and/or stanols are esterified with vegetable oil based fatty acids.

In this specification the plant sterols include 4-desmethyl sterols, 4-monomethyl sterols and 4,4-dimethyl sterols (triterpene alcohols) and the plant stanols include 4-desmethyl stanols, 4-monomethyl stanols and 4,4-dimethyl stanols. Typical 4-desmethyl sterols are sitosterol, campesterol, stigmasterol, brassicasterol, 22-dehydrobrassicasterol and Δ5-avenasterol. Typical 4,4-dimethyl sterols are cycloartenol, 24-methylenecycloartenol and cyclobranol. Typical stanols are sitostanol, campestanol and their 24-epimers, cycloartanol and saturated forms obtained by saturation of e.g. triterpene alcohols (cycloartenol, 24-methylenecycloartenol and cyclobranol). The term "plant sterol and/or stanol" includes all possible mixtures of named sterols and/or stanols as well as any individual sterol or stanol.

Stanol fatty acid esters and the effects thereof, as well as a suitable method for their preparation, are disclosed in US 6 174 560.

Suitable plant sterol and/or stanol fatty acid esters which can be used in the present invention are disclosed in WO 99/56558 or can be prepared e.g. by the methods described in this publication.

As used here, the term "triglyceride" includes vegetable oils, vegetable and/or animal fats and also fats used as hardstocks (i.e. solid fats used as crystallising components in fatty foods). Vegetable oils include for example soybean oil, sunflower oil, low erucic acid rapeseed oil (Canola), corn oil, olive oil and mixtures thereof. Vegetable fats include for example palm oil, coconut oil and palm kernel oil. Hardstocks typically comprise a mixture of fats that are solid at room temperature. Usually, the hardstocks are made from naturally occurring hard fats such as tropical oils and animal fats (obtained e.g. by fractionation), fats that are prepared by either partial or full hydrogenation of liquid oils with or without subsequent interesterification with liquid oils or by interesterification of vegetable oils.

As used here, the term "emulsifier" refers to a substance promoting the formation and improving the stability of emulsions. Emulsifiers include synthetically produced emulsifiers, emulsifiers derived through chemical modification of naturally occurring materials and lecithin and its derivatives. HLB (hydrophilic lipophilic balance) scale is commonly used to generally describe the emulsifying properties of emulsifiers. An emulsifier with a low HLB value (up to about 6) tends to promote W/O emulsions, an emulsifier with an intermediate HLB value W/O or O/W emulsions and an emulsifier with a high HLB value (from about 8) O/W emulsions. Any of these is possible to use in products according to the invention and suitable ones are chosen depending on the type of emulsion to be produced.

In this specification the emulsified food product is a food product which is an emulsion or has been an emulsion in the production stage. By emulsion is meant a mixture of at least two liquids not soluble in each other. The emulsion may contain some solid components like flavourings, minerals, salts, vitamins, proteins, fibres, herbs and/or spices. The emulsion is any of the possible combinations chosen from the group consisting of O/W, W/O, W/O/W and O/W/O emulsions.

According to proposed EU Regulation on Nutrition and Health Claims Made on Foods "low energy" is allowed to be used for a food containing less than 170 kJ/100 g. However, in this specification the term "low energy" is meant to include all food products including from 0 to 5.0% by weight of triglycerides. The energy value obtained from the triglyceride part of these low energy products corresponds to 0-185 kJ/100 g food product. Besides this the low energy food products contain plant sterol and/or stanol fatty acid ester, the fatty acid part being absorbable. The total energy value of the food products may also be increased by other components such as mono- and diglycerides, carbohydrates and/or proteins.

### Detailed Description of the Invention

In a first aspect of the invention there is provided an emulsified food product comprising water, from 0 to 5% by weight triglycerides, from 0.5 to 60% by weight plant sterol and/or stanol fatty acid ester, wherein the fatty acid composition of the plant sterol and/or stanol fatty acid ester comprises from 0 to 7% by weight saturated fatty acids, and optionally one or more emulsifiers, wherein the weight ratio of emulsifier(s) to the sum of plant sterol and/or stanol fatty acid ester and triglycerides, if present, is between 0-0.10:1.

The emulsified food product according to the invention comprises emulsified foods in which the plant sterol and/or stanol ester imparts in the building up of the texture of the food product. The emulsified food product is a fatty-type of food product, preferably selected from the group consisting of spreads, mayonnaises and dressings. The spreads include yellow fat -type spreads and cream cheese -type spreads. Mayonnaises include mayonnaise-like products. The dressings include both pourable and spoonable dressings. One preferred embodiment is the mayonnaises. Another preferred embodiment is the spreads, especially yellow fat - type spreads.

The fatty acid composition of the plant sterol and/or stanol fatty acid ester comprises from 0 to 7% by weight saturated fatty acids (SAFA), preferably at most 5% by weight saturated fatty acids, and more preferably at most 3% by weight saturated fatty acids. In addition it comprises from 20 to 99% by weight, preferably from 50 to 99% by weight of polyunsaturated fatty acids and from 1 to 70 % by weight, preferably from 1 to 50% by weight of monounsaturated fatty acids.

In a preferred embodiment of the invention the fatty acid composition of the plant sterol and/or stanol fatty acid ester comprises, in addition to 0 - 7% by weight saturated fatty acids, at least 50% by weight polyunsaturated fatty acids (PUFA), preferably at least 60% by weight PUFA, and more preferably at least 70% by weight PUFA. The balance of the fatty acid composition comprises monounsaturated fatty acids (MUFA).

The food product according to the invention may contain triglycerides in an amount of at most 5% by weight, preferably at most 3% by weight, more preferably at most 1 % by weight. In one embodiment of the invention the food product comprises no triglycerides. Thus, according to the invention it is possible to obtain a suitable product quality without the need to add any vegetable oil. In another embodiment of the invention the food product comprises no hardstocks (i.e. solid fats). Thus, according to the invention it is possible to obtain a suitable texture of the food product without the need to add hardstocks or corresponding components. The product quality including the texture of the product is most suitably determined by sensory evaluation. In traditional fatty-type food products triglycerides, such as vegetable oil, or hardstocks or the like have to be added in order to get proper textural properties. These components increase the amount of energy one gets from one serving. Therefore, the present invention makes it possible to decrease the amount of energy one gets from one serving.

Also when the plant sterol and/or stanol ester mixture is liquid at room temperature it was found that it can be used to obtain a suitable texture of the low energy emulsified fatty-type of food product, especially yellow fat -type spreads, without the need of using hardstocks or corresponding components.

The food product according to the invention may contain small amounts of one or more emulsifiers. The weight ratio of emulsifier(s) to the sum of plant sterol and/or stanol fatty acid ester and triglycerides, if present, is between 0-0.10:1. Preferably the weight ratio of emulsifier(s) to the sum of plant sterol and/or stanol fatty acid ester and triglycerides, if present, is between 0-0.075:1, more preferably between 0-0.050:1. In one embodiment of the invention the food product comprises no emulsifier.

Preferred emulsifiers are selected from the group consisting of monoglycerides, such as distilled monoglycerides, diglycerides, monoglyceride derivatives, such as acetic, lactic, succinic or citric acid esters of monoglycerides, lecithins, modified lecithins, such as enzyme modified lecithin, polyglycerol esters, polyglycerol polyricinoleate, sorbitan esters, polysorbates, propylene glycol esters, stearoyl lactylates, such as sodium stearoyl lactylate and calcium stearoyl lactylate, diacetyl tartaric acid esters, diacetyl lactic acid esters, sugar esters, and mixtures of any of these.

The food product according to the invention comprises from 0.5 to 60% by weight plant sterol and/or stanol fatty acid ester, preferably from 0.5 to 20% by weight plant sterol and/or stanol fatty acid ester, more preferably from 1 to 20% by weight plant sterol and/or stanol fatty acid ester, and most preferably from 1 to 15% by weight plant sterol and/or stanol fatty acid ester.

In the food product according to the invention the plant sterol and/or stanol of the plant sterol and/or stanol fatty acid ester may comprise at least 10% by weight of stanol and at most 90% by weight of sterol, preferably at least 30% by weight of stanol and at most 70% by weight of sterol, more preferably at least 50% by weight of stanol and at most 50% by weight of sterol, even more preferably at least 70% by weight of stanol and at most 30% by weight of sterol, and most preferably at least 90% by weight of stanol and at most 10% by weight of sterol. It is preferred that substantially all (e.g. at least 97% by weight) plant sterol and/or stanol of the plant sterol and/or stanol fatty acid ester comprises stanol.

In a preferred embodiment of the invention the plant sterol and/or stanol fatty acid ester is liquid at room temperature.

The food product according to the invention has an energy content from the fat from 50 to 1350 kJ, preferably from 50 to 190 kJ, and most preferably from 50 to 120 kJ, calculated on an amount of food product containing 3.4 g plant sterol and/or stanol fatty acid ester (equivalent to about 2 g plant sterols and/or stanols). This amount of sterol and/or stanol ester is known to give an optimal reduction of serum LDL and total cholesterol levels. The recommended daily dose can vary in different food products and in food products of different manufacturers, and be e.g. 2.5 g plant sterol and/or stanol ester/day (equivalent to 1.5 g plant sterols and/or stanols). For the interpretation of this specification the daily intake of such a product shall be recalculated to the amount of product containing 3.4 g of plant sterol and/or stanol fatty acid ester to evaluate the daily energy content obtained from the product's fat. E.g. the daily recommended intake mentioned on a package might be 20 g of a product and let us say the product contains 5% by weight of triglycerides and 12.5% by weight of stanol ester. When recalculating the recommended intake 2.5 g of stanol ester from this product to 3.4 g stanol ester the daily intake of product would be 27.2 g (100 g x 3.4/12,5) and the energy content of the fat from that amount of product would be 102 kJ (37 kJ/g x (1.4 g + 27.2 g x 0.05).

The food product of the present invention may also comprise optional ingredients such as proteins (e.g. milk proteins), colouring agents, flavours and/or healthy components (e.g. vitamins and/or minerals). Preferably the food product comprises food ingredients and/or additives from 0.1 to 25 % by weight. These are selected from the group of stabilisers, proteins, carbohydrates, flavourings, colouring agents, salts, healthy components including minerals and vitamins, fibres, herbs and/or spices.

The food product according to the invention may contain one or more stabilisers. The amount of the stabiliser(s) is preferably between 0.1-10% by weight, more preferably between 1.0-8.0% by weight. Preferred stabilisers are selected from native and modified starches, maltodextrin, polydextrose, cyclodextrins, cellulose, cellulose derivatives, pectins, carrageenan, tragacanth, xanthan gum, agar, gum arabic, guar gum, locust bean gum, acacia gum, gellan gum, carob gum, algin, alginates, gelatin and any corresponding substances and mixtures thereof.

A preferred emulsified food product according to the invention is a spread comprising
water,
from 0 to 5% by weight triglycerides,
from 10 to 60% by weight, preferably from 15 to 50% by weight, more preferably from 20 to 50% by weight, and most preferably from 25 to 50% by weight plant sterol and/or stanol fatty acid ester, wherein the fatty acid composition of the plant sterol and/or stanol fatty acid ester comprises from 0.5 to 4% by weight, preferably from 1.0 to 3.0% by weight saturated fatty acids, and
one or more emulsifiers, wherein the weight ratio of emulsifier(s) to the sum of plant sterol and/or stanol fatty acid ester and triglycerides, if present, is between 0.01-0.05:1.

Preferably the spread has an energy content from the fat from 50 to 120 kJ calculated on an amount of spread containing 3.4 g plant sterol and/or stanol fatty acid ester.

Preferably the spread further comprises food ingredients and/or additives from 4 to 20% by weight.

The spread preferably comprises no hardstocks and more preferably no vegetable oil.

The spread is preferably a yellow fat -type spread.

Another preferred emulsified food product according to the invention is a mayonnaise comprising
water,
from 0 to 5% by weight triglycerides,
from 5 to 20% by weight, preferably from 5 to 15% by weight plant sterol and/or stanol fatty acid ester, wherein the fatty acid composition of the plant sterol and/or stanol fatty acid ester comprises from 0 to 7% by weight, preferably from 1.0 to 5.0% by weight saturated fatty acids, and
optionally one or more emulsifiers, wherein the weight ratio of emulsifier(s) to the sum of plant sterol and/or stanol fatty acid ester and triglycerides, if present, is between 0-0.1:1.

The mayonnaise preferably has an energy content from the fat from 50 to 190 kJ, calculated on an amount of mayonnaise containing 3.4 g plant sterol and/or stanol fatty acid ester.

The mayonnaise preferably comprises food ingredients and/or additives from 5 to 25% by weight, whereof one or more stabilisers in an amount of at most 8% by weight, preferably from 2 to 8% by weight, more preferably from 2 to 7% by weight, even more preferably from 2 to 6% by weight and most preferably from 2 to 5% by weight of the mayonnaise.

The mayonnaise preferably comprises no hardstocks and more preferably no vegetable oil.

In a second aspect of the invention there is provided a method for preparing an emulsified food product comprising water, from 0 to 5% by weight triglycerides, and from 0.5 to 60% by weight plant sterol and/or stanol fatty acid ester, wherein the fatty acid composition of the plant sterol and/or stanol fatty acid ester comprises from 0 to 7% by weight saturated fatty acids, said method comprising providing a fat phase comprising said plant sterol and/or stanol fatty acid ester having said fatty acid composition, optionally triglycerides and any (more or less) fat soluble component(s) of the food product and an aqueous phase comprising water and any (more or less) water soluble component(s) of the food product, and processing said fat phase and aqueous phase into the emulsified food product.

Preferably the fat phase and the aqueous phase are processed by mixing these phases together under share.

If the emulsified food product comprises stabilisers and/or proteins these are usually included into the aqueous phase. The emulsifier, if present, is included into the phase wherein its solubility is better, typically it is included into the fat phase.

One or more emulsifiers can be introduced into the fat phase or the aqueous phase, the weight ratio of emulsifier(s) to the sum of plant sterol and/or stanol fatty acid ester and triglycerides, if present, being between 0.01-0.10:1, preferably between 0.010-0.075:1, more preferably between 0.01-0.05:1.

In a preferred embodiment of the method of the invention said plant sterol and/or stanol fatty acid ester is liquid at room temperature.

In the preparation of mayonnaises and dressings the fat phase and the aqueous phase can be processed (preferably by mixing under share) at room temperature (around 20°C) or below room temperature. Thus, the liquid plant sterol and/or stanol fatty acid ester can be incorporated by using the same techniques and devices as used for incorporating a conventional liquid oil into a food product.

In the preparation of spreads the fat phase and the aqueous phase can be processed (preferably by mixing under share) at a temperature of about 40°C or below that temperature, even at room temperature.

In one embodiment of the method of the invention there is no need to incorporate hardstocks or the like into the food product in order to impart a suitable texture to the food product. In another embodiment of the method of the invention there is no need to incorporate vegetable oil into the food product in order to obtain a suitable product quality.

By the use of the plant sterol and/or stanol ester according to the invention, it is possible to improve the nutritional properties of the emulsified food product. The plant sterols and/or stanols are esterified with fatty acids, most preferably fatty acids derived from vegetable oils with high content of monounsaturated or polyunsaturated fatty acids as they have a low content of saturated fatty acids. Thus, it is also possible to improve the fatty acid profile of the food product compared to regular (full-fat or low-fat) products. In a preferred embodiment of the invention the triglyceride in the food product is partly (e.g. at least 50%) replaced with plant sterol and/or stanol ester, and preferably the main part (e.g. at least 80%) of the triglycerides is replaced. The triglycerides may also be totally replaced. Thereby it is possible to retain or even improve the fatty acid composition of the food product. This means that the amount of saturated fat does not necessarily increase due to the added plant sterol and/or stanol ester, but instead is often reduced. There is e.g. no need for using any conventional hardstocks (animal fats, tropical fats, or modified vegetable oils such as hydrogenated, interesterified or fractionated vegetable oils) in applications according to this invention. Therefore, the food product contains very low amounts of saturated fatty acids and unhealthy trans-fatty acids. The fatty acid profile of the food product can also be modified to contain more of healthier fatty acids.

In addition, it is possible to reduce the amount of absorbable fat in the final emulsified food product if plant sterol and/or stanol ester replaces most of the triglycerides in the product. Moreover, it is possible to achieve a lower absorbable fat content as compared to the similar product where any of the triglycerides are not replaced with plant sterol and/or stanol ester. The reason for this is that the sterol and/or stanol part of the plant sterol and/or stanol fatty acid ester is virtually unabsorbable and does not increase the energy or absorbable fat content of the emulsified food product.

Another benefit of the invention is that the products according to the invention are also healthier since they are suitable for lowering cholesterol absorption from the intestines, for reducing serum total and/or LDL cholesterol levels and thereby reducing the risk for cardiovascular disease.

Conventional low-fat and fat-free food products have been developed which imitate the viscosity and other textural attributes of the missing fat by means of suitable food stabilisers, such as gums, starches, cellulose and its derivatives. When the amount of fat is reduced in conventional food products, like mayonnaises and spreads, the organoleptic and textural properties such as richness and creaminess are generally adversely affected, i.e. the products are gelly-like. Products according to the invention are instead creamy, more like conventional full-fat products although they have a low energy value from fat. In addition, many of the ingredients used for textural purposes may have a negative impact on flavour, mouthfeel or another key aspect of product quality and desired organoleptic characterististics normally associated with full-fat products. E.g. in conventional low-fat or fat-free mayonnaises the taste of acetic acid is often very sharp, whereas mayonnaises according to the invention are softer in taste.

Another benefit of the invention is that better texture and mouthfeel characteristics as well as product stability can be obtained in many applications.

Still another benefit of this invention is the easy preparation process of the emulsified food product as no preparation of e.g. a mesophase-stabilized emulsion or an aqueous dispersion is needed.

Further, there is still an advantage with the preparation process according to the invention as it can totally be produced at low temperatures i.e. at cold processing temperatures, especially for products which are very sensible for temperature variations and/or microbial contaminations, such as spreads and mayonnaises. This is due to the fact that the melting point of the sterol and/or stanol ester used in the present invention is much lower than that of sterol/stanol ester used in traditional products enriched with stanol/sterol ester. The preparation of mayonnaise is especially sensitive to microbial contamination and therefore the temperature during the whole process must be kept at a low level. Conventionally the preparation of mayonnaise is performed below room temperature at 4 to 15°C. By using the method according to the invention this can be easily accomplished. A suitable emulsifier for the mayonnaise of the present invention is lecithin. At low temperatures also the risk for oxidation is smaller.

The preparation of spreads can according to this invention be performed at conventional or even at lower temperatures than conventionally, suitably at about 40°C or lower. As there is no need to heat the sterol and/or stanol ester during the preparation of spreads according to the invention, the process will be simpler and more economic than conventional ones. Also the multistage crystallisation process required by using triglycerides may be avoided. The spreads of the invention can even be produced in one single crystallisation step.

The food product according to the invention preferably contains no egg yolk which is a component that may cause allergy. Egg yolk is a very effective emulsifier and it is often used in mayonnaises and dressings.

The following examples are presented to further illustrate the invention. All percentages and ratios referred to in this specification are by weight unless otherwise said.

### Example 1

### Mayonnaise-like low energy products

The ingredients in % by weight are set forth in Table 1.

**Table 1**

| | **Products according to the invention** | | | **Rapeseed oil based product** | | **Product containing "high" SAFA stanol ester** | **Product containing "high" SAFA stanol ester and vegetable oil** |
|---|---|---|---|---|---|---|---|
| **Product no** | **1** | **2** | **3** | **4a** | **4b** | **5** | **6** |
| Saturated fatty acids of fatty acid composition in the stanol ester (w-%) | 1.9 | 4.1 | 6.5 | | | 8.0 | 8.0 |

| Ingredients (w-%) | | | | | | | |
|---|---|---|---|---|---|---|---|
| Stanol ester | 6 | 6 | 6 | 0 | 0 | 6 | 6 |
| Rapeseed oil | 0 | 0 | 0 | 6 | 6 | 0 | 10 |
| Water | 76.5 | 78.5 | 78.5 | 76.5 | 71.5 | 78.5 | 68.5 |
| Sugar | 3.5 | 3.5 | 3.5 | 3.5 | 3.5 | 3.5 | 3.5 |
| Salt | 2 | 2 | 2 | 2 | 2 | 2 | 2 |
| Acetic acid (10%) | 3 | 3 | 3 | 3 | 3 | 3 | 3 |
| Spices / flavours | 2.5 | 2.5 | 2.5 | 2.5 | 2.5 | 2.5 | 2.5 |
| Fat-free milk powder | 1.5 | 1.5 | 1.5 | 1.5 | 1.5 | 1.5 | 1.5 |
| Stabiliser mix | 5 | 3 | 3 | 5 | 10 | 3 | 3 |

| Fatty acids (g/100 g product) | | | | | | | |
|---|---|---|---|---|---|---|---|
| SAFA | 0.05 | 0.1 | 0.2 | 0.4 | 0.4 | 0.2 | 0.9 |
| MUFA | 0.5 | 0.6 | 0.7 | 3.6 | 3.6 | 0.6 | 5.9 |
| PUFA | 1.8 | 1.7 | 1.6 | 1.7 | 1.7 | 1.6 | 5.1 |

Mayonnaise-like low energy products according to Table 1 were produced by using a conventional method with a high shear batch mixer at 4 to 10°C. Stability of the formed emulsions was tested by centrifugation. Textural properties of the products were evaluated sensorically immediately after manufacturing and after storage at 4°C 24 hours.

Products 1-3 are according to the invention, products 4a and 5 where made to show the effect of the invention and products 4b and 6 are reference products disclosed in prior art.

Products 1-3 according to the invention were stable and had textures that were very like the texture of conventional full-fat mayonnaise (not shown here).

Products 5 and 6 contained stanol ester having 8% SAFA of the fatty acids and is here called "high" SAFA stanol ester. Product 5 (the stanol ester was made from fractionated fatty acids from sunflower oil, and the product did not contain rapeseed oil) had an undesired texture and the stability of the product was bad. Addition of enough of oil to that product improved the texture (product 6; containing stanol ester made with fatty acids from rapeseed oil and containing rapeseed oil) but increased fat and energy content. Products 1-3 according to the invention had a product consistency and appearance comparable to reference low-fat product 6, but were even more smooth and creamy although having a much lower energy content.

No mayonnaise-like consistency was obtained if 6 % of rapeseed oil was used as only fat part (product 4a), and the product was more like a pourable salad dressing. When a mayonnaise-type product was made with rapeseed oil and a high enough amount of stabilizers, a typical, gelly-like low-fat product was obtained (product 4b). Textures of the products now invented (products 1-3) were smoother and more like mayonnaise compared to low-fat products made with rapeseed oil (product 4b).

When the saturated fatty acid content of the fatty acids in the stanol ester was up to 7% by weight (low SAFA stanol ester) the textural properties of the mayonnaise-like product were improved compared to 4a, 4b and 5, and compared to 6 the energy content was much lower. From the values in Table 1 it is also clear that the total amount of the fatty acids (not given) is reduced and the composition of the fat is healthier (less SAFA and relatively more PUFA) for products 1-3.

Also, there was no need to melt the stanol ester or to keep it warm before adding it to the mixture, which is of great importance in large scale production of mayonnaises as they are very sensitive to microbial contamination.

### Example 2

### Mayonnaise-like low energy product

The ingredients in % by weight are set forth in Table 2.

**Table 2**

| | **Product according to the invention** | **Reference product containing oil and maltodextrin** |
|---|---|---|
| **Product no** | **1** | **2** |
| Saturated fatty acids of fatty acid composition in the stanol ester (w-%) | 2 | |

| Ingredients (w-%) | | |
|---|---|---|
| Stanol ester | 10 | 0 |
| Rapeseed oil | 0 | 10 |
| Water | 72.5 | 62.5 |
| Sugar | 3.5 | 3.5 |
| Salt | 2 | 2 |
| Acetic acid (10%) | 3 | 3 |
| Spices/flavours | 2.5 | 2.5 |
| Fat-free milk powder | 1.5 | 1.5 |
| Maltodextrin | 0 | 10 |
| Other stabilisers | 5 | 5 |

| Fatty acids (g/100 g product) | | |
|---|---|---|
| SAFA | 0.08 | 0.7 |
| MUFA | 0.9 | 6.0 |
| PUFA | 3.0 | 2.8 |

Mayonnaise-like low energy products according to Table 2 were produced and textural properties of the products were evaluated as described in example 1. The viscosity of products 1 and 2 were comparable, but when evaluating the product consistency and appearance product 1 was more creamy and smooth. Low SAFA stanol ester (product 1) gives a mayonnaise-type creamy consistency without the necessary need of adding the same amount of stabilisers. Also the too strong sour taste of the mayonnaise-like product 2 containing oil and maltodextrin was effectively masked in product 1. The energy value of product 1 due to less absorbable fat and without the need to add energy containing texturising agents, such as maltodextrin, was effectively reduced compared to the energy value of product 2. Product 2 is an example of a commercial oil based ultra-light mayonnaise usually containing about 3 to 10% oil and having an undesired gelly-like consistency.

### Example 3

### Low energy spreads

The ingredients in % by weight are set forth in Table 3.

**Table 3**

| **Ingredients in weight-%:** | **Products according to the invention** | | **Product containing "high" SAFA stanol ester** | **Commercial light product containing "high" SAFA stanol ester** |
|---|---|---|---|---|
| **Product no** | **1** | **2** | **3** | **4** |
| Saturated fatty acids of fatty acid composition in the stanol ester (w-%) | 2.0 | 3.5 | 8.0 | 8.0 |
| Stanol ester | 39.5 | 39.5 | 39.5 | 14.0 |
| Vegetable oil and fat mixture | 0 | 0 | 0 | 25.6 |
| Monoglyceride | 0.5 | 0.5 | 0.5 | 0.4 |
| Polyglycerol polyricinoleate | 0.2 | 0.2 | 0.2 | 0.2 |
| Water | 55.7 | 55.7 | 55.7 | 44.7 |
| Salt | 0.9 | 0.9 | 0.9 | 0.9 |
| Stabilisers | 3.0 | 3.0 | 3.0 | 0 |
| Beta-carotene, arome, potassium sorbate, citric acid, EDTA | Up to 100 | Up to 100 | Up to 100 | Up to 100 |

| Fatty acids (g/100 g product) | | | | |
|---|---|---|---|---|
| SAFA | 0.3 | 0.6 | 1.3 | 4.7 |
| MUFA | 3.6 | 3.9 | 4.1 | 16.8 |
| PUFA | 11.9 | 11.4 | 10.5 | 8.4 |

The low energy spreads were produced by a conventional method using a pilot scale perfector (Gerstenberg & Agger). The capacity used was 40 kg/h. It was not necessary to heat the stanol ester in the process of producing products 1 and 2, but in the preparation of products 3 and 4 heating was realised. Products 3 and 4 contained stanol ester made with fatty acids from rapeseed oil ("high" SAFA stanol ester).

Stanol ester replaces vegetable oil and fat mixtures in the spread products 1-3. The amount of absorbable fat in these products is 16% by weight and reduced compared to the commercial light product 4 that contains 31% by weight absorbable fat. The ratio of emulsifiers to stanol ester in products 1-3 was 0.018:1.

Textural properties of the products were evaluated sensorically just after manufacturing, after 5 days storage at 10°C and after 3 months at 4°C. The prepared emulsions of products 1 and 2 were stable and the product appearance were comparable to reference product 4 (corresponds to a commercial low fat product). The taste of products 1 and 2 was good and a fast melt down in the mouth was observed. No loose water or oiling out was seen in these products when stored for five days and even for 3 months. Product 3 (8% by weight of the fatty acids in the stanol ester were saturated) was very viscous and during kneading and cooling the water was pressed out from the emulsion. An unacceptable texture and stability of the product was observed.

To gain the same efficacy in lowering serum LDL cholesterol the new products 1 or 2 in Table 3 needs to be consumed in an amount of only about one third of the amount of a commercial light product containing stanol/sterol ester. Also the amount of fatty acids /100 g product is reduced and the fatty acid composition is healthier in products 1-2 compared to product 4.

### Example 4

### Low energy spread

### Ingredients in % by weight

| | |
|---|---|
| Stanol ester | 20.0 (2.5 w-% of the fatty acids are SAFA) |
| Monoglyceride | 0.5 |
| Polyglycerol polyricinoleate | 0.2 |
| Water | 66.2 |
| Milk protein | 1.5 |
| Salt | 0.9 |
| Stabilisers | 7.5 |
| Spices, beta-carotene, arome, potassium sorbate, citric acid, EDTA | up to 100% |

The low energy spread was prepared as in example 3. The stanol ester was not heated.

The product contains no vegetable oil and fat mixtures. The amount of stanol ester corresponds to 8% by weight absorbable fat in the product (from the fatty acid part of the stanol ester) and the amounts of different fatty acids calculated in g/100 g product were: SAFA: 0.2, MUFA: 1.8 and PUFA: 6.0.

The ratio of emulsifiers to stanol ester in the product was 0.035:1.

Textural properties of the product were evaluated sensorically just after manufacturing, after 5 days storage at 10°C and after 3 months at 4°C. The product was stable. The appearance of the product was equal to conventional low fat spreads. The taste of the product was good, a fast melt down in the mouth and flavour release was observed.

### Example 5

### Low energy cream cheese-type spread

### Ingredients in % by weight:

| | |
|---|---|
| Curd cheese, fat free | 62.1 |
| Water | 23.1 |
| Stanol ester | 8.6 (5.0 w-% of the fatty acids are SAFA) |
| Salt | 0.8 |
| Fat free milk powder | 4.0 |
| Stabilisers | 1.2 |
| Sorbic acid | 0.08 |
| Flavours | 0.12 |

A cream cheese-type spread was prepared as known in the art without extra heating of the stanol ester. Fat-soluble ingredients including the stanol ester were mixed to the water phase at room temperature (22°C). The product was pasteurised, homogenised and packed. The cooled product was evaluated after 24 hour and after one week of storage. The product had an appearance as conventional stanol ester-containing cream cheese spreads and a spread-like consistency, which was evaluated smooth, creamy and spreadable. There was no need to use emulsifier in the product. The amounts of different fatty acids calculated in g/100 g product were: SAFA: 0.2, MUFA: 0.9 and PUFA: 2.4.

### Example 6

### Energy values of the absorbable fat of the products from examples 1-4

The energy values are set forth in Table 4.

**Table 4**

| **Traditional light or low-fat products (with or without stanol ester)** | | | | **Low energy products according to the invention (with stanol ester)** | | | | **Less energy** | |
|---|---|---|---|---|---|---|---|---|---|
| **Product** | **Absorbable fat* g/100 g product** | **Energy from fat** kJ /100 g product** | **Energy from fat kJ/ day***** | **Product** | **Absorbable fat* g/100 g product** | **Energy from fat** kJ /100g product** | **Energy from fat kJ/ day***** | **/100g product** | **/day** |
| Mayonnaise Example 1 Product 6 | 12,4 | 460 | 260 | Mayonnaise Example 1 Product 1-3 | 2.4 | 90 | 52 | 80% | 80% |
| Mayonnaise Example 2 Product 2 | 10 | 370 | - | Mayonnaise Example 2 Product 1 | 4.0 | 150 | 52 | 40% | - |
| Spread Example 3 Product 4 | 31 | 1150 | 280 | Spread Example 3 Product 1-2 | 16 | 590 | 52 | 49% | 82% |
| Spread Example 3 Product 4 | 31 | 1150 | 280 | Spread Example 4 | 8 | 300 | 52 | 74% | 82% |

| | | | | | | | | | |
|---|---|---|---|---|---|---|---|---|---|
| * Absorbable fat = g of fatty acids of stanol ester, acylglycerols ** Energy from fat = 37 kJ/g absorbable fat *** A daily dose of 3.4 g of plant sterol and/or stanol ester is known to give the optimal reduction of serum cholesterol levels. Here is calculated the daily energy content from the fat obtained from the products when eating the products in such amounts as to obtain this optimal daily dose of stanol ester. | | | | | | | | | |

Table 4 shows clearly that intake of fat and energy from fat is significantly reduced in the products according to the invention, as is the energy intake from the whole products as well. Products shown in the examples 1-4 have 40 to 80% less energy than traditional stanol ester-containing low-fat products and most of the other low-fat products on the market. Also the amount of energy obtained when eating a daily recommended amount of cholesterol lowering plant sterol and/or stanol fatty acid ester is significantly reduced.

## Claims

1. An emulsified food product comprising water, from 0 to 5% by weight triglycerides, from 0.5 to 60% by weight plant sterol and/or stanol fatty acid ester, wherein the fatty acid composition of the plant sterol and/or stanol fatty acid ester comprises from 0 to 7% by weight saturated fatty acids, and optionally one or more emulsifiers, wherein the weight ratio of emulsifier(s) to the sum of plant sterol and/or stanol fatty acid ester and triglycerides, if present, is between 0-0.10:1.

2. The food product according to claim 1, wherein the food product is selected from the group consisting of spreads, mayonnaises and dressings.

3. The food product according to claim 1 or 2, wherein the fatty acid composition of the plant sterol and/or stanol fatty acid ester comprises at most 5 % by weight saturated fatty acids, preferably at most 3% by weight saturated fatty acids.

4. The food product according to any one of claims 1 to 3, wherein the food product comprises at most 3% by weight triglycerides, preferably at most 1% by weight triglycerides.

5. The food product according to any one of claims 1 to 4, wherein the weight ratio of emulsifier(s) to the sum of plant sterol and/or stanol fatty acid ester and triglycerides, if present, is between 0-0.075:1, preferably between 0-0.050:1.

6. The food product according to any one of claims 1 to 5, wherein the food product comprises from 0.5 to 20% by weight plant sterol and/or stanol fatty acid ester, preferably from 1 to 20% by weight plant sterol and/or stanol fatty acid ester, and most preferably from 1 to 15% by weight plant sterol and/or stanol fatty acid ester.

7. The food product according to any one of claims 1 to 6, wherein the plant sterol and/or stanol of the plant sterol and/or stanol fatty acid ester comprises at least 10% by weight of stanol and at most 90% by weight of sterol, preferably at least 30% by weight of stanol and at most 70% by weight of sterol, more preferably at least 50% by weight of stanol and at most 50% by weight of sterol, even more preferably at least 70% by weight of stanol and at most 30% by weight of sterol, and most preferably at least 90% by weight of stanol and at most 10% by weight of sterol.

8. The food product according to any one of claims 1 to 7, wherein the plant sterol and/or stanol fatty acid ester is liquid at room temperature.

9. The food product according to any one of claims 1 to 8, wherein the food product comprises no emulsifier.

10. The food product according to any one of claims 1 to 9, wherein the energy content from the fat is from 50 to 1350 kJ, preferably from 50 to 190 kJ, and most preferably from 50 to 120 kJ calculated on an amount of food product containing 3.4 g plant sterol and/or stanol fatty acid ester.

11. The food product according to any one of claims 1 to 10, wherein the food product further comprises food ingredients and/or additives from 0.1 to 25 % by weight.

12. The food product according to any one of claims 1 to 11, wherein the food product comprises no hardstocks.

13. The food product according to any one of claims 1 to 13, wherein the food product comprises no vegetable oil.

14. An emulsified food product in the form of a spread, comprising water, from 0 to 5% by weight triglycerides, from 10 to 60% by weight plant sterol and/or stanol fatty acid ester, wherein the fatty acid composition of the plant sterol and/or stanol fatty acid ester comprises from 0.5 to 4% by weight saturated fatty acids, and one or more emulsifiers, wherein the weight ratio of emulsifier(s) to the sum of plant sterol and/or stanol fatty acid ester and triglycerides is between 0.01-0.05:1.

15. The spread according to claim 14, wherein the fatty acid composition of the plant sterol and/or stanol fatty acid ester comprises from 1.0 to 3.0% by weight saturated fatty acids.

16. The spread according to claim 14 or 15, wherein the spread comprises at most 3% by weight triglycerides, preferably at most 1 % by weight triglycerides.

17. The spread according to any one of claims 14 to 16, wherein the amount of plant sterol and/or stanol fatty acid ester is from 15 to 50% by weight, preferably from 20 to 50% by weight, more preferably from 25 to 50% by weight.

18. The spread according to any one of claims 14 to 17, wherein the plant sterol and/or stanol of the plant sterol and/or stanol fatty acid ester comprises at least 10% by weight of stanol and at most 90% by weight of sterol, preferably at least 30% by weight of stanol and at most 70% by weight of sterol, more preferably at least 50% by weight of stanol and at most 50% by weight of sterol, even more preferably at least 70% by weight of stanol and at most 30% by weight of sterol, and most preferably at least 90% by weight of stanol and at most 10% by weight of sterol.

19. The spread according to any one of claims 14 to 18, wherein the plant sterol and/or stanol fatty acid ester is liquid at room temperature.

20. The spread according to any one of claims 14 to 19, wherein the energy content from the fat is from 50 to 120 kJ calculated on an amount of spread containing 3.4 g plant sterol and/or stanol fatty acid ester.

21. The spread according to any one of claims 14 to 20, wherein it further comprises food ingredients and/or additives from 4 to 20% by weight.

22. The spread according to any one of claims 14 to 21, wherein it comprises no hardstocks.

23. The spread according to any one of claims 14 to 22, wherein it comprises no vegetable oil.

24. An emulsified food product in the form of a mayonnaise, comprising water, from 0 to 5% by weight triglycerides, from 5 to 20% by weight plant sterol and/or stanol fatty acid ester, wherein the fatty acid composition of the plant sterol and/or stanol fatty acid ester comprises from 0 to 7% by weight saturated fatty acids, and optionally one or more emulsifiers, wherein the weight ratio of emulsifier(s) to the sum of plant sterol and/or stanol fatty acid ester and triglycerides, if present, is between 0-0.1:1.

25. The mayonnaise according to claim 24, wherein the fatty acid composition of the plant sterol and/or stanol fatty acid ester comprises from 1.0 to 5.0% by weight saturated fatty acids.

26. The mayonnaise according to claim 24 or 25, wherein the mayonnaise comprises at most 3% by weight triglycerides, preferably at most 1% by weight triglycerides.

27. The food product according to any one of claims 24 to 26, wherein the weight ratio of emulsifier(s) to the sum of plant sterol and/or stanol fatty acid ester and triglycerides, if present, is between 0-0.075:1, preferably between 0-0.050:1.

28. The mayonnaise according to any one of claims 24 to 27, wherein the amount of plant sterol and/or stanol fatty acid ester is from 5 to 15% by weight.

29. The mayonnaise according to any one of claims 24 to 28, wherein the plant sterol and/or stanol of the plant sterol and/or stanol fatty acid ester comprises at least 10% by weight of stanol and at most 90% by weight of sterol, preferably at least 30% by weight of stanol and at most 70% by weight of sterol, more preferably at least 50% by weight of stanol and at most 50% by weight of sterol, even more preferably at least 70% by weight of stanol and at most 30% by weight of sterol, and most preferably at least 90% by weight of stanol and at most 10% by weight of sterol.

30. The mayonnaise according to any one of claims 24 to 29, wherein the plant sterol and/or stanol fatty acid ester is liquid at room temperature.

31. The food product according to any one of claims 24 to 30, wherein the food product comprises no emulsifier.

32. The mayonnaise according to any one of claims 24 to 31, wherein the energy content from the fat is from 50 to 190 kJ calculated on an amount of mayonnaise containing 3.4 g plant sterol and/or stanol fatty acid ester.

33. The mayonnaise according to any one of claims 24 to 32, wherein it further comprises food ingredients and/or additives from 5 to 25% by weight, whereof a stabiliser or a mixture of stabilisers in an amount of at most 8% by weight of the mayonnaise.

34. The mayonnaise according to claim 33, wherein it comprises one or more stabilisers from 2 to 8% by weight, preferably from 2 to 7% by weight, more preferably from 2 to 6% by weight and most preferably from 2 to 5% by weight.

35. The mayonnaise according to any one of claims 24 to 34, wherein it comprises no hardstocks.

36. The mayonnaise according to any one of claims 24 to 35, wherein it comprises no vegetable oil.

37. A method for preparing an emulsified food product comprising water, from 0 to 5% by weight triglycerides, and from 0.5 to 60% by weight plant sterol and/or stanol fatty acid ester, wherein the fatty acid composition of the plant sterol and/or stanol fatty acid ester comprises from 0 to 7% by weight saturated fatty acids, said method comprising providing a fat phase comprising said plant sterol and/or stanol fatty acid ester having said fatty acid composition, optionally triglycerides, and any fat soluble component(s) of the food product, and an aqueous phase comprising water and any water soluble component(s) of the food product, and processing said fat phase and aqueous phase into the emulsified food product.

38. The method according to claim 37, wherein one or more emulsifiers are introduced into the fat phase or the aqueous phase, the weight ratio of emulsifier(s) to the sum of plant sterol and/or stanol fatty acid ester and triglycerides, if present, being between 0.01-0.10:1, preferably between 0.010-0.075:1, more preferably between 0.01-0.05:1.

39. The method according to claim 37 or 38, wherein said plant sterol and/or stanol fatty acid ester is liquid at room temperature.

40. The method according to any of claims 37 to 39 for the preparation of mayonnaise or dressing, wherein the fat phase and the aqueous phase are processed into the emulsified food product at room temperature or below room temperature.

41. The method according to any of claims 37 to 40 for the preparation of spread, wherein the fat phase and the aqueous phase are processed into the emulsified food product at a temperature of about 40°C or below that temperature.

42. The method according to any one of claims 37 to 41, wherein no hardstock is incorporated into the food product.

43. The method according to any one of claims 37 to 42, wherein no vegetable oil is incorporated into the food product.

## Patentansprüche

1. Ein emulgiertes Nahrungsmittelprodukt, enthaltend Wasser, von 0 bis 5 Gew.-% Triglyceride, von 0,5 bis 60 Gew.-% pflanzlichen Sterol- und/oder Stanolfettsäureester, worin die Fettsäurezusammensetzung aus dem pflanzlichen Sterol- und/oder Stanolfettsäureester von 0 bis 7 Gew.-% gesättigte Fettsäuren enthält, und gegebenenfalls einen oder mehrere Emulgator(en), worin das Gewichtsverhältnis des oder der Emulgatoren zu der Summe des pflanzlichen Sterol- und/oder Stanolfettsäureester und der Triglyceride, soweit vorhanden, zwischen 0-0,10:1 liegt.

2. Das Nahrungsmittelprodukt gemäß Anspruch 1, worin das Nahrungsmittelprodukt ausgewählt ist aus der Gruppe, bestehend aus Aufstrichen, Mayonnaisen und Dressings.

3. Das Nahrungsmittelprodukt gemäß Anspruch 1 oder 2, worin die Fettsäurezusammensetzung aus dem pflanzlichen Sterol- und/oder Stanolfettsäureester höchstens 5 Gew.-% gesättigte Fettsäuren, bevorzugt höchstens 3 Gew.-% gesättigte Fettsäuren, enthält.

4. Das Nahrungsmittelprodukt gemäß einem der Ansprüche 1 bis 3, worin das Nahrungsmittelprodukt höchstens 3 Gew-% Triglyceride, bevorzugt höchstens 1 Gew.-% Triglyceride, enthält.

5. Das Nahrungsmittelprodukt gemäß einem der Ansprüche 1 bis 4, worin das Gewichtsverhältnis des oder der Emulgator(en) zu der Summe des pflanzlichen Sterol- und/oder Stanolfettsäureesters und der Triglyceride, soweit vorhanden, zwischen 0-0,075:1, bevorzugt zwischen 0-0.050:1, liegt.

6. Das Nahrungsmittelprodukt gemäß einem der Ansprüche 1 bis 5, worin das Nahrungsmittelprodukt von 0,5 bis 20 Gew.-% pflanzlichen Sterol- und/oder Stanolfettsäureester, bevorzugt von 1 bis 20 Gew.-% pflanzlichen Sterol und/oder Stanolfettsäureester, und besonders bevorzugt von 1 bis 15 Gew.-% pflanzlichen Sterol- und/oder Fettsäureester enthält.

7. Das Nahrungsmittelprodukt gemäß einem der Ansprüche 1 bis 6, worin das pflanzliche Sterol und/oder Stanol des pflanzlichen Sterol- und/oder Stanolfettsäureesters mindestens 10 Gew.-% an Stanol und höchstens 90 Gew.-% an Sterol, bevorzugt mindestens 30 Gew.-% an Stanol und höchstens 70 Gew.-% an Sterol, weiter bevorzugt mindestens 50 Gew.-% an Stanol und höchstens 50 Gew.-% an Sterol, noch weiter bevorzugt mindestens 70 Gew.-% an Stanol und höchstens 30 Gew.-% an Sterol, und am meisten bevorzugt mindestens 90 Gew.-% an Stanol und höchstens 10 Gew.-% an Sterol enthält.

8. Das Nahrungsmittelprodukt gemäß einem der Ansprüche 1 bis 7, worin der pflanzliche Sterol- und/oder Stanolfettsäureester bei Raumtemperatur flüssig ist.

9. Das Nahrungsmittelprodukt gemäß einem der Ansprüche 1 bis 8, worin das Nahrungsmittelprodukt keinen Emulgator enthält.

10. Das Nahrungsmittelprodukt gemäß einem der Ansprüche 1 bis 9, worin der Energiegehalt des Fettes von 50 bis 1350 kJ, bevorzugt von 50 bis 190 kJ und am meisten bevorzugt von 50 bis 120 kJ beträgt, berechnet auf Basis einer Menge des Nahrungsmittelproduktes, enthaltend 3,4 g pflanzlichen Sterol- und/oder Stanolfettsäureester.

11. Das Nahrungsmitteprodukt gemäß einem der Ansprüche 1 bis 10, worin das Nahrungsmittelprodukt ferner von 0,1 bis 25 Gew.-% Nahrungsbestandteile und/oder Additive enthält.

12. Das Nahrungsmittelprodukt gemäß einem der Ansprüche 1 bis 1 1 , worin das Nahrungsmittelprodukt keine Hartfettkomponenten enthält.

13. Das Nahrungsmittelprodukt gemäß einem der Ansprüche 1 bis 13, worin das Nahrungsmittelprodukt kein pflanzliches Öl enthält.

14. Ein emulgiertes Nahrungsmittelprodukt in der Form eines Aufstrichs, enthaltend Wasser, von 0 bis 5 Gew.-% Triglyceride, von 10 bis 60 Gew.-% pflanzlichen Sterol- und/oder Fettsäueester, worin die Fettsäurezusammensetzung aus dem pflanzlichen Sterol- und/oder Stanolfettsäureester von 0,5 bis 4 Gew.-% gesättigte Festtäuren enthält, und einen oder mehrere Emulgator(en), worin das Gewichtsverhältnis des oder der Emulgatoren zu der Summe des pflanzlichen Sterol- und/oder Stanolfettsäureesters und der Triglyceride zwischen 0,01 und 0,05:1 liegt.

15. Der Aufstrich gemäß Anspruch 14, worin die Fettsäurezusammensetzung aus dem pflanzlichen Sterol- und/oder Stanolfettsäureester von 1,0 bis 3,0 Gew.-% gesättigte Fettsäuren enthält.

16. Der Aufstrich gemäß Anspruch 14 oder 15, worin der Aufstrich höchstens 3 Gew.-% Triglyceride, bevorzugt höchstens 1 Gew.-% Triglyceride, enthält.

17. Der Aufstrich gemäß einem der Ansprüche 14 bis 16, worin der Gehalt des pflanzlichen Sterol- und/oder Stanolfettsäureesters von 15 bis 50 Gew.-%, bevorzugt von 20 bis 50 Gew.-%, weiter bevorzugt von 25 bis 50 Gew.-%, beträgt.

18. Der Aufstrich gemäß einem der Ansprüche 14 bis 17, worin das pflanzliche Sterol und/oder Stanol des pflanzlichen Sterol- und/oder Stanolfettsäureester mindestens 10 Gew.-% an Stanol und höchstens 90 Gew.-% an Sterol, bevorzugt mindestens 30 Gew.-% an Stanol und höchstens 70 Gew.-% an Sterol, weiter bevorzugt mindestens 50 Gew.-% an Stanol und höchstens 50 Gew.-% an Sterol, noch weiter bevorzugt mindestens 70 Gew.-% an Stanol und höchstens 30 Gew.-% an Sterol, und am meisten bevorzugt mindestens 90 Gew.-% an Stanol und höchstens 10 Gew.-% an Sterol enthält.

19. Der Aufstrich gemäß einem der Ansprüche 14 bis 18, worin der pflanzliche Sterol- und/oder Fettsäureester bei Raumtemperatur flüssig ist.

20. Der Aufstrich gemäß einem der Ansprüche 14 bis 19, worin der Energiegehalt des Fettes von 50 bis 120 kJ beträgt, berechnet auf Basis einer Menge des Aufstrichs, enthaltend 3,4 g pflanzlichen Sterol- und/oder Stanolfettsäureester.

21. Der Aufstrich gemäß einem der Ansprüche 14 bis 20, worin er ferner von 4 bis 20 Gew.-% Nahrungsmittelbestandteile und/oder Additive enthält.

22. Der Aufstrich gemäß einem der Ansprüche 14 bis 21, worin keine Hartfettkomponenten enthalten ist.

23. Der Aufstrich gemäß einem der Ansprüche 14 bis 22, worin kein pflanzliches Öl enthalten ist.

24. Ein emulgiertes Nahrungsmittelprodukt in Form von einer Mayonnaise, enthaltend Wasser, von 0 bis 5 Gew.-% Triglyceride, von 5 bis 20 Gew.-% pflanzlichen Sterol- und/oder Stanolfettsäureester, worin die Fettsäurezusammensetzung aus dem pflanzlichen Sterol- und/oder Stanolfettsäureester von 0 bis 7 Gew.-% gesättigte Fettsäuren enthält, und gegebenenfalls einen oder mehrere Emulgatoren, worin das Gewichtsverhältnis des oder der Emulgatoren zu der Summe des pflanzlichen Sterol- und/oder Stanolfettäureesters und der Trigylyceride, soweit vorhanden, zwischen 0-0,1:1 liegt.

25. Die Mayonnaise gemäß Anspruch 24, worin die Fettsäurezusammensetzung aus dem pflanzlichen Sterol- und/oder Stanolfettsäureester von 1,0 bis 5,0 Gew.-% gesättigte Fettsäuren enthält.

26. Die Mayonnaise gemäß Anspruch 24 oder 25, worin die Mayonnaise höchstens 3 Gew.-% Triglyceride, bevorzugt höchstens 1 Gew.-% Triglyceride, enthält.

27. Das Nahrungsmittelprodukt gemäß einem der Ansprüche von 24 bis 26, worin das Gewichtsverhältnis des oder der Emulgator(en) zu der Summe des pflanzlichen Sterol- und/oder Stanolfettsäureesters und der Triglyceride, soweit vorhanden, zwischen 0-0,075:1, bevorzugt zwischen 0-0,050:1 liegt.

28. Die Mayonnaise nach einem der Ansprüche 24 bis 27, worin der Gehalt an pflanzlichem Sterol- und/oder Stanolfettsäureester von 5 bis 15 Gew.-% beträgt.

29. Die Mayonnaise gemäß einem der Ansprüche von 24 bis 28, worin das pflanzliche Sterol und/oder Stanol des pflanzlichen Sterol- und/oder Stanolfettsäureesters mindestens 10 Gew.-% an Stanol und höchstens 90 Gew.-% an Sterol, bevorzugt mindestens 30 Gew.-% an Stanol und höchstens 70 Gew.-% an Sterol, weiter bevorzugt mindestens 50 Gew.-% an Stanol und höchstens 50 Gew.-% an Sterol, noch weiter bevorzugt mindestens 70 Gew.-% an Stanol und höchstens 30 Gew.-% an Sterol und am meisten bevorzugt mindestens 90 Gew.-% an Stanol und höchstens 10 Gew.-% an Sterol enthält.

30. Die Mayonnaise gemäß einem der Ansprüche von 24 von 29, worin der pflanzliche Sterol- und/oder Stanolfettsäureester bei Raumtemperatur flüssig ist.

31. Das Nahrungsmittelprodukt gemäß einem der Ansprüche 24 bis 30, worin das Nahrungsmittelprodukt keinen Emulgator enthält.

32. Die Mayonnaise gemäß einem der Ansprüche 24 bis 31, worin der Energiegehalt des Fettes von 50 bis 190 kJ beträgt, berechnet auf Basis eines Gehaltes der Mayonnaise, enthaltend 3,4 g pflanzlichen Sterol- und/oder Stanolfettsäureester.

33. Die Mayonnaise gemäß einem der Ansprüche 24 bis 32, worin sie ferner von 5 bis 25 Gew.-% Nahrungsmittelbestandteile und/oder Additive enthält, wovon ein Stabilisator oder eine Mischung aus Stabilisatoren in einer Menge von höchstens 8 Gew.-% in der Mayonnaise enthalten ist.

34. Die Mayonnaise gemäß Anspruch 33, worin ein oder mehrere Stabilisatoren von 2 bis 8 Gew.-%, bevorzugt von 2 bis 7 Gew.-%, weiter bevorzugt von 2 bis 6 Gew.-% und am meisten bevorzugt von 2 bis 5 Gew.-% enthalten sind.

35. Die Mayonnaise gemäß einem der Ansprüche 24 bis 34, worin keine Hartfettkomponenten enthalten sind.

36. Die Mayonnaise gemäß einem der Ansprüche 24 bis 35, worin kein pflanzliches Öl enthalten ist.

37. Ein Verfahren zur Herstellung eines emulgierten Nahrungsmittelproduktes, enthaltend Wasser, von 0 bis 5 Gew.-% Triglyceride und von 0,5 bis 60 Gew.-% eines pflanzlichen Sterol- und/oder Stanolfettsäureesters, worin die Fettsäurezusammensetzung aus dem pflanzlichen Sterol- und/oder Stanolfettsäureester von 0 bis 7 Gew.-% gesättigte Fettsäuren enthält, wobei das Verfahren das Bereitstellen einer Fettphase, enthaltend den pflanzlichen Sterol- und/oder Stanolfettsäureester mit der Fettsäurezusammensetzung, gegebenenfalls Triglyceride und jede fettlösliche Komponente des Nahrungsmittelproduktes, und eine wässrige Phase, enthaltend Wasser und jede wasserlösliche Komponente des Nahrungsmittelproduktes, und Verarbeiten der Fettphase und der wässrigen Phase zu einem emulgierten Nahrungsmittelprodukt umfasst.

38. Das Verfahren gemäß Anspruch 37, worin ein oder mehrere Emulgatoren in die Fettphase oder in die wässrige Phase eingebracht werden, das Gewichtsverhältnis des oder der Emulgator(en) zu der Summe des pflanzlichen Sterol- und/oder Stanolfettsäureester und der Triglyceride, soweit vorhanden, zwischen 0,01-0,10:1, bevorzugt zwischen 0,010-0,075:1, weiter bevorzugt zwischen 0,01-0,05:1, liegt.

39. Das Verfahren gemäß Anspruch 37 oder 38, worin der pflanzliche Sterol- und/oder Stanolfettsäureester bei Raumtemperatur flüssig ist.

40. Das Verfahren gemäß einem der Ansprüche 37 bis 39 zur Herstellung einer Mayonnaise oder eines Dressings, worin die Fettphase und die wässrige Phase zu einem emulgierten Nahrungsmittelprodukt bei Raumtemperatur oder oberhalb der Raumtemperatur verarbeitet werden.

41. Das Verfahren gemäß einem der Ansprüche 34 bis 40 zur Herstellung eines Aufstrichs, worin die Fettphase und die wässrige Phase zu einem emulgierten Nahrungsmittelprodukt bei einer Temperatur von etwa 40 °C oder unterhalb dieser Temperatur verarbeitet werden.

42. Das Verfahren gemäß einem der Ansprüche 37 bis 40, worin keine Hartfettkomponente in das Nahrungsmittelprodukt eingebracht wird.

43. Das Verfahren gemäß einem der Ansprüche 37 bis 42, worin kein pflanzliches Öl in das Nahrungsmittelprodukt eingebracht wird.

## Revendications

1. Un produit alimentaire émulsifié comprenant de l'eau, de 0 à 5% en poids de triglycérides, de 0,5 à 60% en poids d'esters d'acides gras de stanol et/ou de stérol de plantes, dans lequel la composition d'acide gras de stanol et/ou de stérol de plantes comprend de 0 à 7% en poids d'acides gras saturés et dans lequel le rapport pondéral émulsifiant(s)/somme des esters d'acides gras de stanol et/ou de stérol de plantes et des triglycérides, si des triglycérides sont présents, est compris entre 0-0,10/1.

2. Le produit alimentaire selon la revendication 1, dans lequel le produit alimentaire est choisi dans le groupe comprenant les produits à tartiner, les mayonnaises et les assaisonnements.

3. Le produit alimentaire selon la revendication 1 ou 2, dans lequel la composition des 'esters d'acide gras de stérols et/ou de stanol de plantes comprend au maximum 5% en poids d'acides gras saturés, de préférence au maximum 3% en poids d'acides gras saturés.

4. Le produit alimentaire selon une quelconque des revendications 1 à 3, dans lequel le produit alimentaire comprend au maximum 3% en poids de triglycérides, de préférence au maximum 1% en poids de triglycérides.

5. Le produit alimentaire selon une quelconque des revendications 1 à 4, dans lequel le rapport pondéral émulsifiant(s)/somme des esters d'acide gras de stanol et/ou de stérol de plantes et des triglycérides, si des triglycérides sont présents, est compris entre 0-0,075/1, de préférence compris entre 0-0,050/1.

6. Le produit alimentaire selon une quelconque des revendications 1 à 5, dans lequel le produit alimentaire comprend de 0,5 à 20% en poids d'esters d'acides gras de stanol et/ou de stérol de plantes, de préférence de 1 à 20% en poids d'esters d'acides gras de stanol et/ou de stérol de plantes, et plus particulièrement de préférence de 1 à 15% en poids d'esters d'acides gras de stanol et/ou de stérol de plantes.

7. Le produit alimentaire selon une quelconque des revendications 1 à 6, dans lequel les stanol et/ou stérols de plantes des esters d'acide gras de stérols et/ou de stanol de plantes comprend au moins 10% en poids de stanol et au maximum 90% en poids de stérol, de préférence au moins 30% en poids de stanol et au maximum 70% en poids de stérol, plus particulièrement de préférence au moins 50% en poids de stanol et au maximum 50% en poids de stérol, encore plus particulièrement de préférence au moins 70% en poids de stanol et au maximum 30% en poids de stérol, et encore plus préférentiellement au moins 90% en poids de stanol et au maximum 10% en poids de stérol.

8. Le produit alimentaire selon une quelconque des revendications 1 à 7, dans lequel les esters d'acide gras de stanol et/ou de stérol de plantes sont liquides température ambiante.

9. Le produit alimentaire selon une quelconque des revendications 1 à 8, dans lequel le produit alimentaire ne comprend pas d'agent émulsifiant.

10. Le produit alimentaire selon une quelconque des revendications 1 à 9, dans lequel la teneur en énergie de la matière grasse est comprise entre 50 et 1350 k.J, de préférence entre 50 et 190 kJ, et plus préférentiellement de 50 à 120 kJ calculé sur la base de la quantité de produit alimentaire contenant 3,4g d'esters d'acides gras de stanol et/ou de stérol de plantes.

11. Le produit alimentaire selon une quelconque des revendications 1 à 10, dans lequel le produit alimentaire comprend en outre des additifs et/ou ingrédients alimentaires en une proportion de 0,1 à 25% en poids

12. Le produit alimentaire selon une quelconque des revendications 1 à 11 dans lequel le produit alimentaire ne comprend pas de matière grasse solide.

13. Le produit alimentaire selon une quelconque des revendications 1 à 13. dans lequel le produit alimentaire ne comprend pas d'huile végétale.

14. Un produit alimentaire émulsifié sous forme d'une produit à tartiner, comprenant de l'eau, de 0 à 5% en poids de triglycérides, de 10 à 60% en poids d'esters d'acides gras de stanol et/ou de stérol de plantes, dans lequel la composition d'esters d'acides gras d'acide gras de stanol et/ou de stérol de plantes comprend de 0,5 à 4% en poids d'acides gras saturés, et un ou plusieurs agents émulsifiants, dans lequel le rapport pondéral émulsifiant(s)/somme d'esters d'acides gras de stanol et/ou de stérol de plantes et des triglycérides est compris entre 0.01 et.0,05/1.

15. Le produit à tartiner selon la revendication 14, dans lequel la composition d'acide gras de stanol et/ou de stérol de plantes d'esters d'acides gras comprend de 1.0 à 3.0% en poids d'acides gras saturés.

16. Le produit à tartiner selon la revendication 14 ou 15, dans lequel le produit à tartiner comprend au maximum 3% en poids de triglycérides, de préférence au maximum 1% en poids de triglycérides.

17. Le produit à tartiner selon une quelconque des revendications 14 to 16, dans lequel la quantité d'esters d'acides gras de stanol et/ou de stérol de plantes est comprise entre 15 et 50% en poids, de préférence entre 20 et 50% en poids et, plus particulièrement de préférence de 25 to 50% en poids.

18. Le produit à tartiner selon une quelconque des revendications 14 to 17, dans lequel les stanol et/ou stérols de plantes des esters d'acide gras de stérols et/ou de stanol de plantes comprennent au moins 10% en poids de stanol et au maximum 90% en poids de stérol, de préférence au moins 30% en poids de stanol et au maximum 70% en poids de stérol, plus particulièrement de préférence au moins 50% en poids de stanol et au maximum 50% en poids de stérol, encore plus particulièrement de préférence au moins 70% en poids de stanol et au maximum 30% en poids de stérol, et plus préférentiellement au moins 90% en poids de stanol et au maximum 10% en poids de stérol.

19. Le produit à tartiner selon une quelconque des revendications 14 à 18, dans lequel les acides gras de stanol et/ou de stérol de plantes sont liquides à température ambiante.

20. Le produit à tartiner selon une quelconque des revendications 14 à 19, dans lequel la teneur en énergie de la matière grasse est comprise entre 50 et 120 kJ calculée sur la base de la quantité de produit à tartiner contenant 3,4 g d'esters d'acides gras de stanol et/ou de stérol de plantes.

21. Le produit à tartiner selon une quelconque des revendications 14 à 20, lequel comprend en outre des additifs et/ou ingrédients alimentaires en une proportion de 4 to 20% en poids de matière grasse solide

22. Le produit à tartiner selon une quelconque des revendications 14 à 21, qui ne contient pas de matière grasse solide.

23. Le produit à tartiner selon une quelconque des revendications 14 à 22, qui ne contient pas d'huile végétale.

24. Un produit alimentaire émulsifié sous forme de mayonnaise, comprenant de l'eau, de 0 à 5% en poids de triglycérides, de 5 à 20% en poids d'esters d'acides gras de stanol et/ou de stérol de plantes, dans lequel la composition en acide de l'esters d'acides gras de stanol et/ou de stérol de plantes comprend de 0 à 7% en poids d'acides gras saturés, et éventuellement un ou plusieurs émulsifiants, dans lequel le rapport pondéral agent(s) émulsifiant(s)/somme d'esters d'acides gras de stanol et/ou de stérol de plantes et des triglycérides, si des triglycérides sont présents; est compris entre 0-0,1/1.

25. La mayonnaise selon la revendication 24, dans lequel la composition des esters d'acides gras de stanol et/ou de stérol de plantes comprend de 1.0 à 5.0% en poids d'acides gras saturés.

26. La mayonnaise selon la revendication 24 ou 25, dans lequel la mayonnaise comprend au maximum 3% en poids de triglycérides, de préférence au maximum 1% en poids de triglycérides.

27. Le produit alimentaire selon une quelconque des revendications 24 à 26_{J} dans lequel le rapport pondéral émulsifiant(s)/somme des esters d'acides gras de stanol et/ou de stérol de plantes et des triglycérides, si des triglycérides sont présents, est compris entre 0-0,075/1, de préférence compris entre 0-0,050/1.

28. La mayonnaise selon une quelconque des revendications 24 à 27, dans lequel la quantité d'esters d'acides gras de stanol et/ou de stérol de plantes est compris entre 5 et 15% en poids.

29. La mayonnaise selon une quelconque des revendications 24 à 28, dans lequel les stanol et/ou stérols de plantes des esters d'acide gras de stérols et/ou de stanol de plantes comprend au moins 10% en poids de stanol et au maximum 90% en poids de stérol, de préférence au moins 30% en poids de stanol et au maximum 70% en poids de stérol, plus particulièrement de préférence au moins 50% en poids de stanol et au maximum 50% en poids de stérol, encore plus particulièrement de préférence au moins 70% en poids de stanol et au maximum 30% en poids de stérol, et plus préférentiellement au moins 90% en poids de stanol et au maximum 10% en poids de stérol.

30. La mayonnaise selon une quelconque des revendications 24 à 29, dans lequel les esters d'acides gras de stanol et/ou de stérol de plantes sont liquides à température ambiante.

31. Le produit alimentaire selon une quelconque des revendications 24 à 30, dans lequel le produit alimentaire ne comprend pas d'agent émulsifiant.

32. La mayonnaise selon une quelconque des revendications 24 à 31, dans lequel la teneur en énergie de la matière grasse est comprise entre 50 et 190 kJ calculée sur la base de la quantité de mayonnaise contenant 3,4g d'esters d'acide gras de stanol et/ou de stérol de plantes.

33. La mayonnaise selon une quelconque des revendications 24 à 32, qui comprend en outre des mélanges de stabilisants en une proportion maximum de 8% en poids de mayonnaise.

34. La mayonnaise selon la revendication 33, qui comprend un ou plusieurs agents stabilisants à raison de 2 à 8% en poids, de préférence de 2 à 7% en poids, plus particulièrement de préférence de 2 à 6% en poids et plus préférentiellement de 2 à 5% en poids

35. La mayonnaise selon une quelconque des revendications 24 à 34, qui ne comprend pas de matière grasse solide.

36. La mayonnaise selon une quelconque des revendications 24 à 35_{J} dans qui ne comprend pas d'huile végétale.

37. Un procédé de préparation d'un produit alimentaire émulsifié comprenant de l'eau, de 0 à 5% en poids de triglycérides, et de 0,5 à 60% en poids d'esters d'acides gras de stanol et/ou de stérol de plantes, dans lequel la composition d'acide gras des esters d'acides gras de stanol et/ou de stérol de plantes comprend de 0 à 7% en poids d'acides gras saturés, ce procédé comprenant la fourniture d'une phase graisseuse comprenant ledit esters d'acides gras de stérol et/ou stanol de plantes ayant ladite composition d'acide gras, éventuellement des triglycérides, et tous les constituant(s) gras soluble(s) du produit alimentaire, ainsi que une phase aqueuse comprenant de l'eau et tous les constituant(s) hydrosoluble(s) du produit alimentaire, et l'introduction desdites phases grasse et aqueuse dans le produit alimentaire émulsifié.

38. Le procédé selon la revendication 37, dans lequel un ou plusieurs agents émulsifiants sont introduits dans la phase grasse ou la phase aqueuse, le rapport pondéral émulsifiant(s)/somme des esters d'acide gras de stanol et/ou de stérol de plantes et des triglycérides, si des triglycérides sont présents, est compris entre 0,01-0,10/1, de préférence entre 0,010- 0,075/1, plus particulièrement de préférence entre 0,01-0,05/1.

39. Le procédé selon la revendication 37 ou 38, dans lequel l'esters d'acides gras de stérol et/ou de stanol de plantes est liquide à température ambiante.

40. Le procédé selon une quelconque des revendications 37 à 39, pour la préparation de mayonnaise ou d'assaisonnement dans lequel la phase grasse et la phase aqueuse sont introduites dans le produit alimentaire émulsifié à température ambiante ou inférieure à la température ambiante.

41. Le procédé selon une quelconque des revendications 37 à 40, pour la préparation of produit à tartiner, dans lequel la phase grasse et la phase aqueuse sont introduites dans le produit alimentaire émulsifié à une température d'environ 40°C ou inférieure à cette température.

42. Le procédé selon une quelconque des revendications 37 à 41, dans lequel aucune matière grasse solide n'est incorporé dans le produit alimentaire.

43. Le procédé selon une quelconque des revendications 37 à 42, dans lequel aucune huile végétale n'est incorporée dans le produit alimentaire.
